(19) Europäisches Patentamt / European Patent Office / Office européen des brevets

(11) **EP 3 971 685 B1**

(12) # EUROPEAN PATENT SPECIFICATION

(45) Date of publication and mention
of the grant of the patent:
**28.01.2026 Bulletin 2026/05**

(21) Application number: **20805347.0**

(22) Date of filing: **09.05.2020**

(51) International Patent Classification (IPC):
*G06F 3/01* (2006.01)

(52) Cooperative Patent Classification (CPC):
**G06F 3/011; G06F 3/017; G06F 3/0304;
G06N 3/045; G06N 3/0464; G06N 3/09;
G06V 20/20; G06V 40/11**

(86) International application number:
**PCT/CN2020/089448**

(87) International publication number:
**WO 2020/228643 (19.11.2020 Gazette 2020/47)**

(54) **INTERACTIVE CONTROL METHOD AND APPARATUS, ELECTRONIC DEVICE AND STORAGE MEDIUM**

INTERAKTIVES STEUERUNGSVERFAHREN UND -VORRICHTUNG, ELEKTRONISCHE
VORRICHTUNG UND SPEICHERMEDIUM

PROCÉDÉ ET APPAREIL DE COMMANDE INTERACTIVE, DISPOSITIF ÉLECTRONIQUE ET
SUPPORT DE STOCKAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2019 CN 201910399073**

(43) Date of publication of application:
**23.03.2022 Bulletin 2022/12**

(73) Proprietor: **GUANGDONG OPPO MOBILE
TELECOMMUNICATIONS
CORP., LTD.
Dongguan, Guangdong 523860 (CN)**

(72) Inventor: **ZHUO, Shijie
Dongguan, Guangdong 523860 (CN)**

(74) Representative: **Thorniley, Peter et al
Venner Shipley LLP
200 Aldersgate
London EC1A 4HD (GB)**

(56) References cited:
WO-A1-2008/132724        CN-A- 105 046 710
CN-A- 107 016 704        CN-A- 108 519 817
US-A1- 2017 140 552      US-A1- 2017 154 471
US-A1- 2018 300 098

## Description

### FIELD

The present disclosure relates to the field of computer technologies, and particularly, to an interactive control method, an interactive control apparatus, an electronic device, and a computer-readable storage medium.

### BACKGROUND

In augmented reality (AR), a precise interaction between a user and a virtual object is particularly important. In the related art, the environment is reconstructed to form a virtual world, and then an arbitrary virtual object is placed in the virtual world. In order to interact with the placed virtual object, it is necessary to track a hand by using a color image collected by a camera to obtain position information of the hand, and then interactions with the virtual object, e.g., picking up, placing, and rotating, can be performed.

In the above method, the position information of the hand obtained by hand tracking is only a two-dimensional coordinate in a screen space. When interacting with the virtual object, it is also necessary to convert the two-dimensional coordinate into a three-dimensional coordinate in the virtual world through estimation, so as to perform spatial calculations with a three-dimensional coordinate of the virtual object. However, the step of converting the two-dimensional coordinate into the three-dimensional coordinate through estimation may produce a relatively great error, which makes the estimated three-dimensional coordinate inaccurate, thereby resulting in an inaccurate interaction. In addition, a process of estimating the three-dimensional coordinate may result in low operation efficiency and affect interactive experience. US 2017/140552 Al provides a method for detecting three-dimensional positions of a pair of cameras mounted on a wearable display and a 3D position of a user's hand in a space by using distance input data of an RGB-Depth camera. US 2017/154471 Al relates to a method of providing an augmented reality interaction service. WO 2008/132724 Al discloses a method and apparatus for interactive human computer interface using a self-contained single housing autostereoscopic (AS) display configured to render 3D virtual objects into fixed viewing zones.

It should be noted that the above-mentioned information in the background technologies is only intended to facilitate understanding of the background of the present disclosure, and thus may include information that does not constitute the related art known to those skilled in the art.

### SUMMARY

An object of the present invention is to provide an interactive control method and apparatus, and a computer-readable storage medium, as set out in the appended claims, so as to solve the problem that a precise interaction is impossible due to limitations and defects in the related art, at least to some extent.

Other features and advantages of the present disclosure will become apparent from the following detailed description, or can be learned in part from practicing of the present disclosure.

According to an aspect of the present disclosure, an interactive control method is provided. The method includes: obtaining a two-dimensional screen space coordinate of a key point of a predetermined part by a monocular camera, and obtaining a real distance between the key point of the predetermined part and a photographic device; determining a three-dimensional coordinate of the key point of the predetermined part in a virtual world according to the real distance and the two-dimensional screen space coordinate; and determining a spatial relationship between the key point of the predetermined part and a virtual object in the virtual world based on the three-dimensional coordinate, and controlling, based on the spatial relationship, the key point of the predetermined part to interact with the virtual object. Said determining the three-dimensional coordinate of the key point of the predetermined part in the virtual world according to the real distance and the two-dimensional screen space coordinate includes: obtaining a three-dimensional coordinate of the key point of the predetermined part in a projection space based on the real distance and the two-dimensional screen space coordinate; determining a projection matrix based on a Field Of View (FOV) of the photographic device; and converting the three-dimensional coordinate in the projection space into the three-dimensional coordinate in the virtual world based on the projection matrix.

In an exemplary embodiment of the present disclosure, said obtaining the two-dimensional screen space coordinate of the key point of the predetermined part by the monocular camera includes: obtaining a first image containing the predetermined part collected by the monocular camera; and performing a key point detection on the first image to obtain the two-dimensional screen space coordinate of the key point of the predetermined part.

In an exemplary embodiment of the present disclosure, said performing the key point detection on the first image to obtain the two-dimensional screen space coordinate of the key point of the predetermined part includes: processing the first image through a trained convolutional neural network model to obtain the key point of the predetermined part; and performing a regression processing on the key point of the predetermined part to obtain position information of the key point of the predetermined part, and determining the position information as the two-dimensional screen space coordinate.

In an exemplary embodiment of the present disclosure, the photographic device includes a depth camera, and said obtaining the real distance between the key point of the predetermined part and the photographic device includes: obtaining a second image containing the predetermined part collected by the depth camera; aligning the first image and the second image; and valuing the two-dimensional screen space coordinate on the aligned second image to obtain the real distance between the key point of the predetermined part and the depth camera.

In an exemplary embodiment of the present disclosure, said determining the spatial relationship between the key point of the predetermined part and the virtual object in the virtual world based on the three-dimensional coordinate, and controlling, based on the spatial relationship, the key point of the predetermined part to interact with the virtual object include: obtaining the three-dimensional coordinate of the key point of the predetermined part in the virtual world, the predetermined part interacting with the virtual object; calculating a distance between the three-dimensional coordinate and a coordinate of the virtual object; and triggering an interaction between the key point of the predetermined part and the virtual object, when the distance satisfies a predetermined distance.

In an exemplary embodiment of the present disclosure, said triggering the interaction between the key point of the predetermined part and the virtual object includes: identifying a current action of the key point of the predetermined part; and matching the current action with a plurality of predetermined actions, and interacting with the virtual object in response to the current action based on a result of the matching. The plurality of predetermined actions and interactive operations are in one-to-one correspondence.

According to an aspect of the present disclosure, an interactive control apparatus is provided. The apparatus includes: a parameter obtaining module configured to obtain a two-dimensional screen space coordinate of a key point of a predetermined part by a monocular camera, and obtain a real distance between the key point of the predetermined part and a photographic device; a three-dimensional coordinate calculation module configured to determine a three-dimensional coordinate of the key point of the predetermined part in a virtual world according to the real distance and the two-dimensional screen space coordinate; and an interaction execution module configured to determine a spatial relationship between the key point of the predetermined part and a virtual object in the virtual world based on the three-dimensional coordinate, and control, based on the spatial relationship, the key point of the predetermined part to interact with the virtual object. The three-dimensional coordinate calculation module includes: a reference coordinate obtaining module configured to obtain a three-dimensional coordinate of the key point of the predetermined part in a projection space according to the real distance and the two-dimensional screen space coordinate; a matrix calculation module configured to determine a projection matrix based on a FOV of the photographic device; and a coordinate conversion module configured to convert the three-dimensional coordinate in the projection space into the three-dimensional coordinate in the virtual world based on the projection matrix.

According to an aspect of the present disclosure, a computer-readable storage medium is provided. The computer-readable storage medium stores a computer program. The computer program, when executed by a processor, performs the interactive control method according to any embodiment as described above.

In the interactive control method and apparatus, the computer-readable storage medium provided according to an exemplary embodiment, in an aspect, the three-dimensional coordinate of the key point of the predetermined part in the virtual world is obtained by combining the screen space coordinate of the key point of the predetermined part and the real distance to the photographic device, so as to avoid the step of estimating the three-dimensional coordinate and reduce the error caused by the estimation step. In this way, the accuracy can be improved, and an accurate three-dimensional coordinate can be obtained, thereby realizing a precise interaction based on the three-dimensional coordinate. In another aspect, since the three-dimensional coordinate of the key point of the predetermined part can be obtained by combining the screen space coordinate with the real distance, it is unnecessary to estimate the coordinate, which improves calculation efficiency, so as to quickly obtain the accurate three-dimensional coordinate of the key point of the predetermined part in the virtual world. In yet another aspect, the key point of the predetermined part can be precisely controlled to interact with the virtual object in accordance with the spatial relationship between the key point of the predetermined part and the virtual object in the virtual world determined, which the spatial relationship is determined based on the three-dimensional coordinate, thereby improving user experience.

It should be understood that the above general description and the following detailed description are only exemplary and for purpose of explanation, and cannot limit the present disclosure.

BRIEF DESCRIPTION OF DRAWINGS

The accompanying drawings, which are incorporated in and constitute a part of this specification, illustrate embodiments of the present disclosure and, together with the description, serve to explain principles of the present disclosure.

FIG. 1 schematically illustrates a schematic diagram of an interactive control method according to an exemplary embodiment of the present disclosure.

FIG. 2 schematically illustrates a flowchart of determining a screen space coordinate according to an exemplary embodiment of the present disclosure.

FIG. 3 schematically illustrates a schematic diagram of key points of a hand according to an exemplary embodiment of the present disclosure.

FIG. 4 schematically illustrates a flowchart of determining a real distance according to an exemplary embodiment of the present disclosure.

FIG. 5 schematically illustrates a flowchart of calculating a three-dimensional coordinate in a virtual world according to an exemplary embodiment of the present disclosure.

FIG. 6 schematically illustrates a flowchart of controlling a key point of a predetermined part to interact with a virtual object according to an exemplary embodiment of the present disclosure.

FIG. 7 schematically illustrates a specific flowchart of triggering an interaction between a key point of a predetermined part and a virtual object according to an exemplary embodiment of the present disclosure.

FIG. 8 schematically illustrates an entire flowchart of an interaction between a key point of a predetermined part and a virtual object according to an exemplary embodiment of the present disclosure.

FIG. 9 schematically illustrates a block diagram of an interactive control apparatus according to an exemplary embodiment of the present disclosure.

FIG. 10 schematically illustrates a schematic diagram of an electronic device according to an exemplary embodiment of the present disclosure.

FIG. 11 schematically illustrates a schematic diagram of a computer-readable storage medium according to an exemplary embodiment of the present disclosure.

## DESCRIPTION OF EMBODIMENTS

Exemplary embodiments are described below in a detail with reference to the accompanying drawings. However, the exemplary embodiments can be implemented in various forms, and the present disclosure should not be construed as being limited to examples set forth herein. On the contrary, the present disclosure can be more comprehensive and complete by providing these embodiments, and the concept of the exemplary embodiments can be fully conveyed to those skilled in the art. The described features, structures or characteristics can be combined in any suitable way in one or more embodiments. In the following description, many specific details are provided to facilitate a sufficient understanding of the embodiments of the present disclosure. However, those skilled in the art can realize that technical solutions of the present disclosure can be practiced without one or more of the specific details, or other methods, components, devices, steps, etc., can be adopted. In other cases, the well-known technical solutions are not illustrated or described in detail to prevent them from diverting the attention on the technical solutions of the present disclosure and obscuring all aspects of the present disclosure. The invention is set out in the appended claims.

In addition, the drawings are only schematic illustrations of the present disclosure, and are not necessarily drawn to scale. Same reference numerals in the drawings denote same or similar parts, and thus repeated description thereof will be omitted. Some of the block diagrams illustrated in the drawings are functional entities and do not necessarily correspond to physically or logically independent entities. These functional entities may be implemented in a form of software, or implemented in one or more hardware modules or integrated circuits, or implemented in different networks and/or processor devices and/or microcontroller devices.

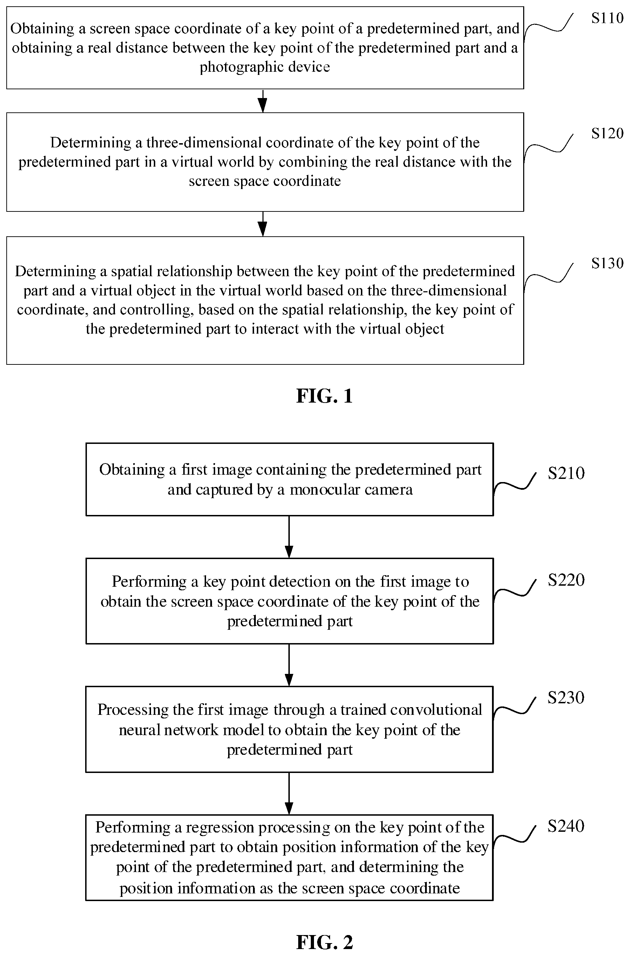

In order to solve a problem that an estimation of a three-dimensional coordinate of a hand in a virtual world may affect an interaction process in the related art, in an exemplary embodiment, an interactive control method is provided. The interactive control method can be applied to any scenario in the field of augmented reality, e.g., a number of application scenarios such as games, education, and life based on augmented reality. Referring to FIG. 1, the interactive control method according to this exemplary embodiment will be described below in detail.

In step S110, a screen space coordinate of a key point of a predetermined part is obtained, and a real distance between the key point of the predetermined part and a photographic device is obtained.

In this exemplary embodiment, the predetermined part may be any part capable of interacting with a virtual object in the virtual world (virtual space). For example, the predetermined part includes, but being not limited to, a hand, the head, and the like of a user. As an example, the predetermined part is the hand of the user in the present exemplary embodiment. The hand described herein includes one hand or two hands of the user interacting with the virtual object.

The screen space coordinate refers to a two-dimensional coordinate (including X-axis and Y-axis coordinate values) in an image space displayed on a screen. The screen space coordinate is only affected by the object itself and a viewport, rather than being affected by a position of an object in the space. Specifically, the screen space coordinate of the key point of the hand can be obtained by performing a key point detection on the hand. The key point detection performed on the hand is a process of identifying a joint on a finger and identifying a fingertip in an image containing a hand. The key point is an abstract description of a fixed region, which not only represents information or a position of a point, but also represents a combined relationship with the context and a surrounding neighborhood.

FIG. 2 illustrates a specific flowchart for obtaining the two-dimensional screen space coordinate. Referring to FIG. 2, step S210 to step S230 may be included in the step of obtaining the screen space coordinate of the key point of the predetermined part.

In step S210, obtained is a first image containing the predetermined part collected by a monocular camera.

In this step, the monocular camera reflects a three-dimensional world in a two-dimensional form. Here, the monocular camera can be provided on a mobile phone or on a photographic device such as a camera for capturing images. The first image refers to a color image collected by the monocular camera. Specifically, the monocular camera can capture a color image including the hand from any angle and any distance. The angle and distance are not specifically limited herein, as long as the hand can be clearly displayed.

In step S220, a key point detection is performed on the first image to obtain the screen space coordinate of the key point of the predetermined part.

In this step, the key point detection may be performed on the predetermined part based on the color image obtained in step S210. Step S230 and step S240 may be included in a specific process of performing the key point detection on the predetermined part to obtain the screen space coordinate.

In step S230, the first image is processed through a trained convolutional neural network model to obtain the key point of the predetermined part.

In this step, a convolutional neural network model can be trained to obtain a trained model. A small amount of labeled data containing a certain key point of the hand can be used to train the convolutional neural network model. Specifically, a plurality of photographic devices with different viewing angles can be used to photograph the hand. The above-mentioned convolutional neural network model can be used to preliminarily detect a key point. A three-dimensional position of the key point is obtained by constructing a triangle of the key point based on pose of the photographic device. The calculated three-dimensional position is re-projected on respective two-dimensional images with different viewing angles. The convolutional neural network model is trained using the two-dimensional images and key point labeling. After a number of iterations, an accurate key point detection model for the hand, i.e., the trained convolutional neural network model, can be obtained. Further, the color image containing the hand and collected in step S210 may be input to the trained convolutional neural network model to accurately detect the key point of the hand through the trained convolutional neural network model.

In step S240, a regression processing is performed on the key point of the predetermined part to obtain position information of the key point of the predetermined part, and the position information is determined as the screen space coordinate.

In this step, after the key point of the hand is detected, the regression processing can be performed on the key point of the hand. The regression processing refers to quantitatively describing a relationship between variables in a form of probability. A model used for the regression processing can be a linear regression model or a logistic regression model, etc., as long as the function of regression processing can be realized. Specifically, the key point of the hand can be input into the regression model to obtain the position information of the key point of the hand. An output corresponding to each key point of the hand is an X-axis coordinate value and a Y-axis coordinate value of the key point of the hand in the image space. An image coordinate system in the image space takes a center of an image plane as a coordinate origin, the X axis and the Y axis are respectively parallel to two perpendicular edges of the image plane, and (X, Y) represents coordinate values in the image coordinate system.

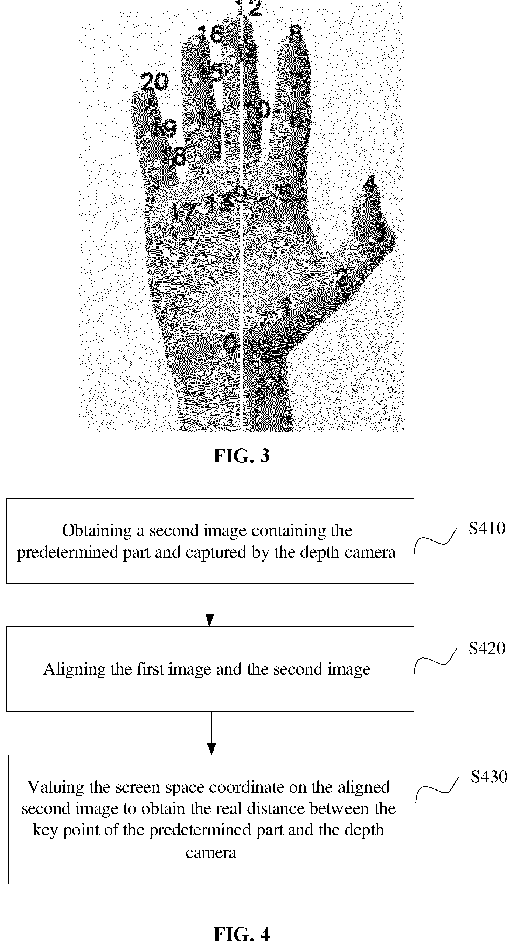

FIG. 3 is a schematic diagram illustrating key points of a hand. With reference to FIG. 3, for a color image containing the hand, twenty-one key points of the hand (key points numbered from a serial number 0 to a serial number 20) can be generated.

In addition, in this exemplary embodiment, the real distance between the key point of the predetermined part and the photographic device can also be obtained. The real distance refers to a real physical distance between the key point of the predetermined part and the photographic device, for example, one meter, two meters, etc.

FIG. 4 is a schematic diagram illustrating obtaining the real distance between the key point of the predetermined part and the photographic device. FIG. 4 mainly includes step S410 to step S430.

In step S410, obtained is a second image containing the predetermined part collected by the depth camera.

In this step, the photographic device refers to a depth camera for capturing the second image containing the hand, and the second image is a depth image collected by the depth camera. The depth camera includes, but is not limited to, a Time of Flight (TOF) camera, and it can also be other cameras used to measure depth, such as an infrared distance sensor camera, a structured light camera, and a laser structure camera. In the exemplary embodiment, the TOF camera is taken as an example for description.

The TOF camera may be composed of several units such as a lens, a light source, an optical component, a sensor, a control circuit, and a processing circuit. The TOF camera adopts an active light detection manner, mainly aiming to measure a distance by using changes of an incident light signal and a reflected light signal. Specifically, a principle for a TOF module to obtain the second image of the hand includes emitting consecutive near-infrared pulses to a target scene, and receiving light pulses reflected by the hand using a sensor. By comparing a phase difference between the emitted light pulses and the light pulses reflected by the hand, a transmission delay between the light pulses can be calculated to obtain a distance between the hand and an emitter, and finally a depth image of the hand can be obtained. By obtaining the second image of the hand with the depth camera, the problems of increased cost and inconvenience, which are caused by measuring depth information with sensors outside a terminal, can be avoided.

It should be noted that the second image collected by the depth camera in step S410 and the first image collected by the monocular camera in step S210 are collected simultaneously to ensure that the collected color images and depth images have a one-to-one correspondence.

In step S420, the first image and the second image are aligned.

In this step, since the second image and the first image are collected simultaneously, the second images and the first images have a one-to-one correspondence, and they are respectively different representations of the same point in the real space on two images. Since a resolution of the color image is greater than a resolution of the depth image, and the color image and the depth image are different in size, it is necessary to align the color image and the depth image, in order to improve an accuracy of image combination. The aligning refers to an operation that makes the sizes of the color image and the depth image the same. The aligning may be, for example, directly scaling the color image or the depth image, or performing a postprocessing on the depth image to increase its resolution. Of course, there may be other alignment manners, which are not specifically limited in present disclosure.

In step S430, the screen space coordinate is valued on the aligned second image to obtain the real distance between the key point of the predetermined part and the depth camera.

In this step, after the color image and the depth image are aligned to each other, values of the screen space coordinate (X-axis coordinate value and Y-axis coordinate value) obtained in FIG. 2 can be directly taken on the aligned depth image to obtain a real physical distance between the key point of the hand and the depth camera. By combining the screen space coordinate with the depth image, the real physical distance between the key point of the hand and the depth camera can be accurately obtained.

With continued reference to FIG. 1, in step S120, the three-dimensional coordinate of the key point of the predetermined part in the virtual world is determined according to the real distance and the screen space coordinate.

In this exemplary embodiment, the virtual world is formed by reconstructing an environment for placing virtual objects and for interactions. Since the coordinate obtained in step S110 is a coordinate of the key point of the hand in a projection space, the coordinate of the key point of the hand in the projection space can be converted to obtain the coordinate of the key point of the hand in the virtual world.

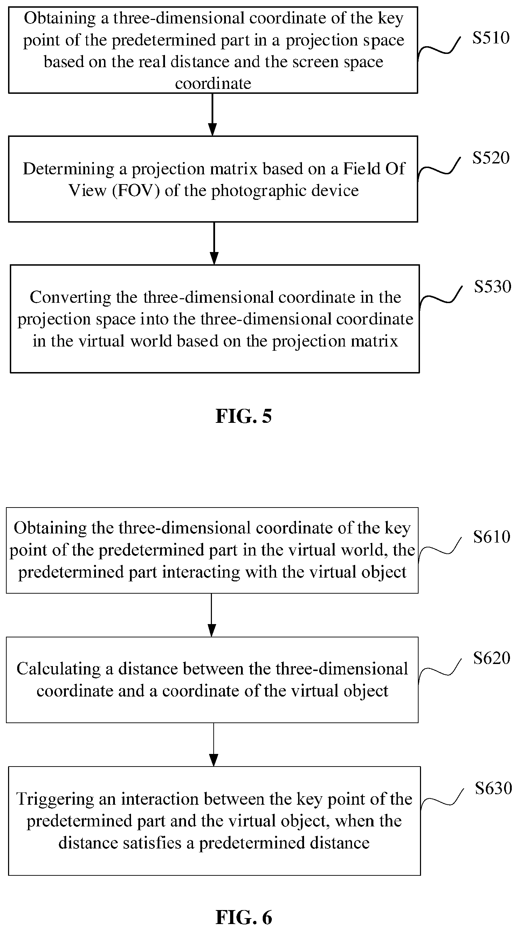

FIG. 5 schematically illustrates a specific process of calculating a three-dimensional coordinate in a virtual world. Referring to FIG. 5, this specific process mainly includes steps S510 to S530.

In step S510, a three-dimensional coordinate of the key point of the predetermined part in a projection space is obtained based on the real distance and the screen space coordinate.

In this step, the screen space coordinate refers to a two-dimensional coordinate of the key point of the predetermined part in the projection space. The real distance between the key point of the predetermined part and the depth camera can be a Z-axis coordinate value of the key point of the predetermined part in the projection space, such that the three-dimensional coordinate (X, Y, Z) of the key point of the predetermined part in the projection space can be obtained by combining the real physical distance with the screen space coordinate. For example, if a screen space coordinate of a key point 1 of the hand in the projection space obtained from a color image 1 is represented as (1, 2), and a real physical distance between the key point 1 of the hand and the depth camera obtained from a depth image 2 is 0.5, it can be determined that a three-dimensional coordinate of the key point 1 of the hand in the projection space is represented as (1, 2, 0.5).

In step S520, a projection matrix is determined based on a Field Of View (FOV) of the photographic device.

In this step, the FOV refers to a range covered by a lens, i.e., an included angle formed by two edges of a maximum range where a physical image of a target to be measured (hand) can pass through the lens. The larger the FOV is, the bigger a range of vision is. Specifically, a parallel light source may be used to measure the FOV, or a luminance meter may also be used to obtain the FOV by measuring brightness distribution of the photographic device, and a spectrophotometer may also be used to measure the FOV.

After the FOV is obtained, a corresponding projection matrix can be determined based on the FOV, such that the three-dimensional coordinate in the projection space can be converted into the coordinate system in the virtual world. The projection matrix is used to map a coordinate of each point to a two-dimensional screen. The projection matrix will not change with the changes in a position of the model or a movement of an observer in a scenario, and it requires only one time of initialization. Each photographic device can correspond to one or more projection matrices. The projection matrix is a four-dimensional vector related to a distance to a near plane, a distance to a far plane, an FOV, and a display aspect ratio. The projection matrix can be obtained directly from an application, or can be obtained by adaptive training of a plurality of key frames rendered after the application is started.

With continued reference to FIG. 5, in step S530, the three-dimensional coordinate in the projection space is converted into the three-dimensional coordinate in the virtual world based on the projection matrix.

In this step, after the projection matrix is obtained, the three-dimensional coordinate of the key point of the predetermined part in the projection space can be converted based on the projection matrix to obtain the three-dimensional coordinate of the key point of the predetermined part in the virtual world. It should be noted that the coordinate system corresponding to the three-dimensional coordinate in the virtual world belongs to the same coordinate system as that of the placed virtual object.

In this exemplary embodiment, by combining the screen space coordinate with the real distance between the key point of the predetermined part and the photographic device, a process of estimating the key point of the predetermined part can be omitted, thereby avoiding a step of estimating the three-dimensional coordinate and the resulted errors. In this way, the accuracy can be improved, and the accurate three-dimensional coordinates can be obtained. In the meantime, the calculation efficiency is improved, and the accurate three-dimensional coordinates can be quickly obtained.

With continued reference to FIG. 1, in step S 130, a spatial relationship between the key point of the predetermined part and a virtual object in the virtual world is determined based on the three-dimensional coordinate, and based on the spatial relationship, the key point of the predetermined part is controlled to interact with the virtual object.

In this exemplary embodiment, the spatial relationship refers to whether the key point of the predetermined part is in contact with the virtual object or refers to a positional relationship between the key point of the predetermined part and the virtual object. Specifically, the positional relationship can be expressed by a distance therebetween. Further, the key point of the predetermined part can be controlled to interact with the virtual object based on the spatial relationship between the key point of the predetermined part and the virtual object, thereby achieving a precise interaction process between the user and the virtual object in an augmented reality scenario.

FIG. 6 schematically illustrates a flowchart of controlling a key point of a predetermined part to interact with a virtual object. Specifically, FIG. 6 includes steps S610 to S630.

In step 610, obtained is the three-dimensional coordinate of the key point of the predetermined part in the virtual world, the predetermined part interacting with the virtual object.

In this step, the key point of the predetermined part interacting with the virtual object can be any one of the key points illustrated in FIG. 3, such as the fingertip of the index finger or the tail of the thumb, and the like. Here, the fingertip of the index finger is taken as an example for explanation. If the fingertip of the index finger interacts with the virtual object, it can be determined that the fingertip of the index finger corresponds to the key point denoted with a serial number 8 based on a correspondence between the key points of the predetermined part and the key points illustrated in FIG. 3. Further, the three-dimensional coordinate of the key point denoted with the serial number 8 in the virtual world can be obtained based on processes in step S110 and step S120.

In step 620, calculated is a distance between the three-dimensional coordinate in the virtual world and a coordinate of the virtual object.

In this step, the coordinate of the virtual object refers to a coordinate of a center point of the virtual object in the virtual world, or a collision box of the virtual object. After obtaining the three-dimensional coordinate of the key point of the predetermined part in the virtual world and the coordinate of the center point of the virtual object, the distance therebetween can be calculated based on a distance calculation equation. The distance described herein includes, but is not limited to, the Euclidean distance, a cosine distance, and the like. The distance calculation equation may be that as illustrated in formula (1):

$$dist(X,Y) = \sqrt{\sum_{i=1}^{n}(x_i - y_i)^2} \qquad \text{Formula (1)}$$

In step 630, when the distance satisfies a predetermined distance, an interaction between the key point of the predetermined part and the virtual object is triggered.

In this step, the predetermined distance refers to a predetermined threshold for triggering an interaction. In order to effectively trigger the interaction, the predetermined distance can be a small value, such as 5 cm or 10 cm. In this exemplary embodiment, the distance between the three-dimensional coordinate of the key point of the hand in the virtual world and the coordinate of the virtual object, as obtained in step S620, may be compared with the predetermined distance, in order to determine whether to trigger an interaction based on the comparison result. Specifically, if the distance is smaller than or equal to the predetermined distance, the interaction between the key point of the predetermined part and the virtual object is triggered; and if the distance is greater than the predetermined distance, the key point of the predetermined part is not triggered to interact with the virtual object. For example, if an operation of clicking the virtual object with the index finger is performed, the three-dimensional coordinate (X, Y, Z) of the key point denoted with the serial number 8 in the virtual world can be obtained based on the serial number of the key point; then the Euclidean distance between the coordinate of the key point denoted with the serial number 8 and the center point of the virtual object can be calculated; and further, when the Euclidean distance is smaller than the predetermined distance (5 cm), a click operation is triggered.

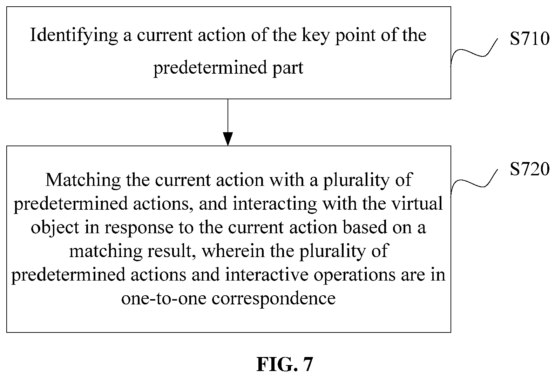

FIG. 7 schematically illustrates a flowchart of triggering the interaction between the key point of the predetermined part and the virtual object. Specifically, FIG. 7 includes step S710 and step S720.

In step S710, a current action of the key point of the predetermined part is identified.

In this step, it can be first determined which kind of action the current action of the key point of the predetermined part belongs to, e.g., clicking, pressing, flipping, and the like. Specifically, the action of the key point of the predetermined part can be determined and recognized based on features and a movement trajectory of the key point of the predetermined part, etc., which will not be described in detail here.

In step S720, the current action is matched with a plurality of predetermined actions, and an interaction with the virtual object is performed based on a result of the matching in response to the current action. The plurality of predetermined actions corresponds to the interactive operations in one-to-one correspondence.

In this step, the plurality of predetermined actions refers to standard actions or reference actions that are pre-stored in a database, including but not limited to, clicking, pushing, toggling, pressing, flipping, and the like. The interactive operation refers to an interaction between the virtual object and the key point of the predetermined part corresponding to each predetermined action. For example, clicking corresponds to a selection operation, pushing corresponds to close, toggling corresponds to scrolling left and right, pressing corresponds to confirming, flipping corresponds to returning, and the like. It should be noted that the one-to-one correspondence between the predetermined actions and the interactive operations can be adjusted based on actual needs, and is not limited to any of these examples in the present disclosure.

Further, the identified current action of the key point of the hand can be matched with the plurality of predetermined actions stored in the database. Specifically, a similarity between the identified current action and the plurality of predetermined actions can be calculated. When the similarity is greater than a predetermined threshold, a predetermined action with the highest similarity can be determined as the successfully matched predetermined action to improve accuracy. Furthermore, the interaction can be performed based on the result of the matching in response to the current action. Specifically, the interactive operation corresponding to the successfully matched predetermined action can be determined as the interactive operation corresponding to the current action in step S710, so as to realize the process of interacting with the virtual object based on the current action. For example, if the determined current action is the operation of clicking the virtual object with the index finger, a corresponding selection operation corresponding can be performed.

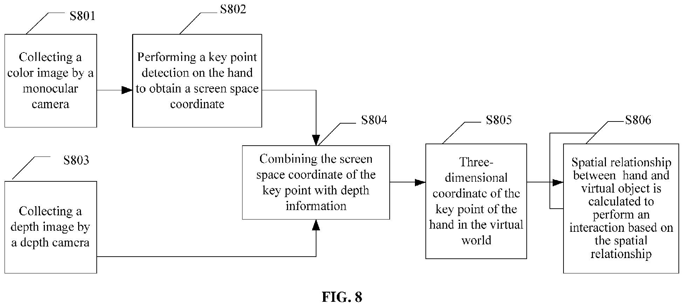

FIG. 8 illustrates the entire flowchart of an interaction between a user and a virtual object in augmented reality, mainly including the following steps with reference to FIG. 8.

In step S801, a color image collected by a monocular camera is obtained.

In step S802, a key point detection is performed on the hand to obtain a screen space coordinate.

In step S803, a depth image collected by a depth camera is obtained. Specifically, a real distance can be obtained from the depth image.

In step S804, the screen space coordinate is combined with depth information. The depth information refers to a real distance between the key point of the hand and the depth camera.

In step S805, the three-dimensional coordinate of the key point of the hand in the virtual world is obtained.

In step S806, a spatial relationship between the key point of the hand and the virtual object is calculated to perform an interaction based on the spatial relationship.

In the method provided in FIG. 8, the three-dimensional coordinate of the key point of the predetermined part in the virtual world is obtained by combining the screen space coordinate of the key point of the predetermined part and the real distance to the photographic device, thereby avoiding the step of estimating the three-dimensional coordinate and the resulted errors. In this way, the accuracy can be improved, and the accurate three-dimensional coordinate can be obtained, thereby achieving a precise interaction based on the three-dimensional coordinate. Since the three-dimensional coordinate of the key point of the predetermined part can be obtained by combining the screen space coordinate with the real distance, the process of estimating the coordinate is omitted, which improves the calculation efficiency, and can quickly obtain the accurate three-dimensional coordinate. Based on the spatial relationship between the key point of the predetermined part and the virtual object in the virtual world determined in accordance with the three-dimensional coordinate, the key point of the predetermined part can be precisely controlled to interact with the virtual object, thereby improving user experience.

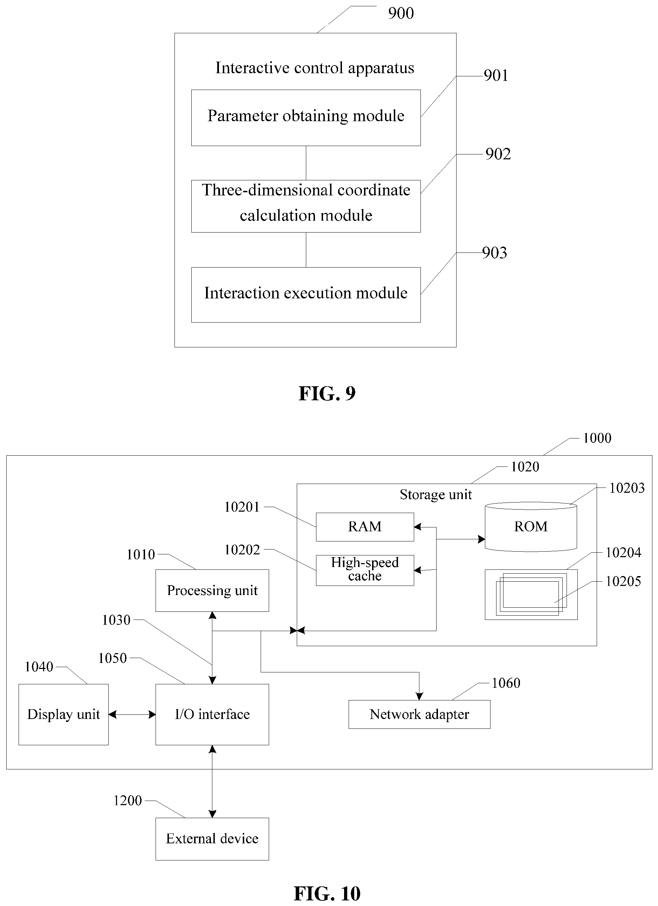

In an exemplary embodiment, an interactive control apparatus is further provided. As illustrated in FIG. 9, an apparatus 900 may include a parameter obtaining module 901, a three-dimensional coordinate calculation module 902, and an interaction execution module 903.

The parameter obtaining module 901 is configured to obtain a screen space coordinate of a key point of a predetermined part, and obtain a real distance between the key point of the predetermined part and a photographic device.

The three-dimensional coordinate calculation module 902 is configured to determine a three-dimensional coordinate of the key point of the predetermined part in a virtual world according to the real distance and the screen space coordinate.

The interaction execution module 903 is configured to determine a spatial relationship between the key point of the predetermined part and a virtual object in the virtual world based on the three-dimensional coordinate, and control the key point of the predetermined part to interact with the virtual object based on the spatial relationship.

In an exemplary embodiment of the present disclosure, the parameter obtaining module includes: a first image obtaining module configured to obtain a first image containing the predetermined part collected by a monocular camera; and a screen space coordinate determining module configured to perform a key point detection on the first image to obtain the screen space coordinate of the key point of the predetermined part.

In an exemplary embodiment of the present disclosure, the screen space coordinate determining module includes: a key point detection module configured to process the first image through a trained convolutional neural network model to obtain the key point of the predetermined part; and a coordinate determining module configured to perform a regression processing on the key point of the predetermined part to obtain position information of the key point of the predetermined part and determine the position information as the screen space coordinate.

In an exemplary embodiment of the present disclosure, the photographic device includes a depth camera. The parameter obtaining module includes: a second image obtaining module configured to obtain a second image containing the predetermined part collected by the depth camera; an image alignment module configured to align the first image and the second image; and a real distance obtaining module configured to value the screen space coordinate on the aligned second image to obtain the real distance between the key point of the predetermined part and the depth camera.

In an exemplary embodiment of the present disclosure, the three-dimensional coordinate calculation module includes: a reference coordinate obtaining module configured to obtain a three-dimensional coordinate of the key point of the predetermined part in a projection space based on the real distance and the screen space coordinate; a matrix calculation module configured to determine a projection matrix based on a FOV of the photographic device; and a coordinate conversion module configured to convert the three-dimensional coordinate in the projection space into the three-dimensional coordinate in the virtual world based on the projection matrix.

In an exemplary embodiment of the present disclosure, the interaction execution module includes: a three-dimensional coordinate obtaining module configured to obtain the three-dimensional coordinate of the key point of the predetermined part interacting with the virtual object in the virtual world; a distance calculation module configured to calculate a distance between the three-dimensional coordinate and a coordinate of the virtual object; and an interaction determining module configured to trigger an interaction between the key point of the predetermined part and the virtual object when the distance satisfies a predetermined distance.

In an exemplary embodiment of the present disclosure, the interaction determining module includes: an action identification module configured to identify a current action of the key point of the predetermined part; and an interaction triggering module configured to match the current action with a plurality of predetermined actions, and interact with the virtual object in response to the current action based on a result of the matching. The plurality of predetermined actions corresponds to the interactive operations are in one-to-one correspondence.

It should be noted that the specific details of each module in the interactive control apparatus have been described in detail in the corresponding method, and the details thereof will not be repeated here.

It should be noted that although several modules or units of the apparatus for action execution are mentioned in the above detailed description, such a division is not compulsory. In fact, according to the embodiments of the present disclosure, features and functions of two or more modules or units described above may be embodied in one module or unit. Conversely, features and functions of one module or unit described above can be further divided into a number of modules or units to be embodied.

In addition, although various steps of the method in the present disclosure are described in a specific order in the drawings, it does not require or imply that these steps must be performed in the specific order, or that all the steps illustrated must be performed in order to achieve the desired results. Additionally or alternatively, some steps may be omitted, a number of steps may be combined into one step for execution, and/or one step may be divided into several steps for execution, and the like.

In an exemplary embodiment of the present disclosure, an electronic device capable of implementing the above method is also provided.

Those skilled in the art can understand that various aspects of the present disclosure can be implemented as a system, a method, or a program product. Therefore, various aspects of the present disclosure can be specifically implemented in the following manners, i.e., a complete hardware implementation, a complete software implementation (including firmware, microcode, etc.), or an implementation combining hardware with software, which can be collectively referred to as "a circuit", "a module", or "a system" in the present disclosure.

An electronic device 1000 according to an embodiment of the present disclosure will be described below with reference to FIG. 10. The electronic device 1000 illustrated in FIG. 10 is only an example, and should not bring any limitation on functions and an application scope of the embodiments of the present disclosure.

As illustrated in FIG. 10, the electronic device 1000 is in a form of a general-purpose computing device. Components of the electronic device 1000 may include, but not limited to, at least one processing unit 1010, at least one storage unit 1020, and a bus 1030 connecting different system components (including the storage unit 1020 and the processing unit 1010), as described above.

The storage unit stores program codes. The program codes may be executed by the processing unit 1010 to allow the processing unit 1010 to execute the steps according to various exemplary embodiments of the present disclosure described in the above section of exemplary method in this specification. For example, the processing unit 1010 may perform the steps as illustrated in FIG. 1. In step S110, a screen space coordinate of a key point of a predetermined part is obtained, and a real distance between the key point of the predetermined part and a photographic device is obtained. In step S120, a three-dimensional coordinate of the key point of the predetermined part in a virtual world is determined according to the real distance and the screen space coordinate. In step S130, a spatial relationship between the key point of the predetermined part and a virtual object in the virtual world is determined based on the three-dimensional coordinate, and based on the spatial relationship, the key point of the predetermined part is controlled to interact with the virtual object.

The storage unit 1020 may include a readable medium in a form of volatile storage unit, such as a Random Access Memory (RAM) 10201 and/or a high-speed cache memory 10202, and the storage unit 1020 may further include a Read Only Memory (ROM) 10203.

The storage unit 1020 may also include a program/utility tool 10204 having a set of program modules 10205 (at least one program modules 10205). Such a program module 10205 includes, but not limited to, an operating system, one or more applications, other program modules, and program data. Each or a combination of these examples may include an implementation of a network environment.

The bus 1030 may represent one or more of several types of bus architectures, including a storage unit bus or a storage unit controller, a peripheral bus, a graphic acceleration port bus, a processor, or a local bus using any of the variety of bus architectures.

A display unit 1040 can be a display with a display function, so as to display, on the display, a processing result obtained by the processing unit 1010 through performing the method in an exemplary embodiment. The display includes, but is not limited to, a liquid crystal display, or other displays.

The electronic device 1000 may also communicate with one or more external devices 1200 (e.g., a keyboard, a pointing device, a Bluetooth device, and the like), with one or more devices that enable a user to interact with the electronic device 1000, and/or with any device that enables the electronic device 1000 to communicate with one or more other computing devices, e.g., a router, a modem, and etc. This kind of communication can be achieved by an Input/Output (I/O) interface 1050. In addition, through a network adapter 1060, the electronic device 1000 may communicate with one or more networks, for example, a Local Area Network (LAN), a Wide Area Network (WAN), and/or a public network such as the Internet. As illustrated in FIG. 10, the network adapter 1060 communicates with other modules of the electronic device 1000 through the bus 1030. It should be understood that, in combination with the electronic device 1000, other hardware and/or software modules, although not illustrated in the drawings, may be used, which include, but not limited to, microcode, device drivers, redundant processing units, external disk drive arrays, Redundant Arrays of Independent Disks (RAID) systems, tape drives, data backup storage systems, and the like.

By means of the description of the above embodiments, it is conceivable for those skilled in the art that the exemplary embodiments described here can be implemented with software, or can be implemented by combining software with necessary hardware. Therefore, the technical solutions according to the embodiments of the present disclosure may be embodied in a form of a software product. The software product can be stored in a non-volatile storage medium (e.g., a Compact Disc-Read Only Memory (CD-ROM), a USB flash disk, a mobile hard disk, etc.) or on the network, and the software product may include several instructions that cause a computing device (e.g., a personal computer, a server, a terminal device, or a network device, etc.) to perform the method according to the embodiments of the present disclosure.

In an exemplary embodiment of the present disclosure, a computer-readable storage medium is further provided. The computer-readable storage medium stores a program product capable of implementing the above method of the present disclosure. In some possible implementations, various aspects of the present disclosure may also be implemented in a form of a program product, which includes program codes. When the program product runs on a terminal device, the program codes cause the terminal device to execute steps according to various exemplary embodiments of the present disclosure described in the above section of exemplary method of this specification.

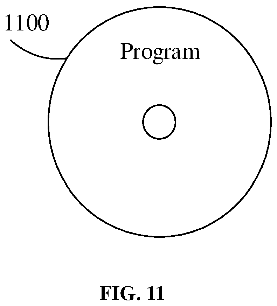

Referring to FIG. 11, a program product 1100 for implementing the above method according to an embodiment of the present disclosure is described. The program product 1100 can adopt a portable CD-ROM and include program codes, for example, it may run on a terminal device, such as a personal computer. However, the program product of the present disclosure is not limited to any of these examples. In the present disclosure, the readable storage medium can be any tangible medium that includes or stores a program. The program can be used by or used in combination with an instruction execution system, apparatus, or device.

The program product may adopt any one of readable media or combinations thereof. The readable medium may be a readable signal medium or a readable storage medium. For example, the readable storage medium may be, but not limited to, an electrical, magnetic, optical, electromagnetic, infrared, or semiconductor system, apparatus, device, component, or any combination thereof. Specific examples of the readable storage medium include (a nonexhaustive list) an electrical connection having one or more wires, a portable disk, a hard disk, a Random Access Memory (RAM), an ROM, an Erasable Programmable Read Only Memory (EPROM) or a flash memory, an optical fiber, a CD-ROM, an optical memory component, a magnetic memory component, or any suitable combination thereof.

The computer readable signal medium may include a data signal propagating in a baseband or as a part of carrier wave which carries readable program codes. Such propagated data signal may be in many forms, including but not limited to an electromagnetic signal, an optical signal, or any suitable combination thereof. The readable signal medium may also be any readable medium other than the readable storage medium, which may transmit, propagate, or transport programs used by an instruction executed system, apparatus or device, or a connection thereof.

The program codes stored on the readable medium may be transmitted using any appropriate medium, including but not limited to wireless, wire, an optical fiber cable, Radio Frequency (RF), or any suitable combination thereof.

The program codes for carrying out operations of the present disclosure may be written in one or more programming languages. The programming language includes an objectoriented programming language, such as Java, C++, as well as a conventional procedural programming language, such as "C" language or similar programming language. The program codes may be entirely executed on a user's computing device, partly executed on the user's computing device, executed as a separate software package, executed partly on a user's computing device and partly on a remote computing device, or executed entirely on the remote computing device or a server. In a case involving a remote computing device, the remote computing device may be connected to the user's computing device through any kind of network, including a Local Area Network (LAN) or a Wide Area Network (WAN), or it can be connected to an external computing device (for example, connected through the Internet of an Internet service provider).

In addition, the above drawings are merely schematic illustrations of the processing included in the method according to the exemplary embodiments of the present disclosure, and are not intended for limitations. It is conceivable that the processing illustrated in the above drawings does not indicate or limit a time sequence of these processing. In addition, it is conceivable that these processing can be, for example, executed synchronously or asynchronously in several modules.

It should be understood that the present disclosure is not limited to the precise structures described above and illustrated in the accompanying drawings. In addition, various modifications and changes can be made without departing from the scope of the present disclosure. The scope of the present disclosure is only defined by the appended claims.

**Claims**

1. An interactive control method, comprising:

    (S110) obtaining a two-dimensional screen space coordinate of a key point of a predetermined part by a monocular camera, and obtaining a real distance between the key point of the predetermined part and a photographic device;
    (S120) determining a three-dimensional coordinate of the key point of the predetermined part in a virtual world according to the real distance and the two-dimensional screen space coordinate; and
    (S130) determining a spatial relationship between the key point of the predetermined part and a virtual object in the virtual world based on the three-dimensional coordinate, and controlling, based on the spatial relationship, the key point of the predetermined part to interact with the virtual object, **characterized in that**,
    said determining the three-dimensional coordinate of the key point of the predetermined part in the virtual world according to the real distance and the two-dimensional screen space coordinate comprises:

        (S510) obtaining a three-dimensional coordinate of the key point of the predetermined part in a projection space based on the real distance and the two-dimensional screen space coordinate;
        (S520) determining a projection matrix based on a Field Of View, FOV, of the photographic device; and
        (S530) converting the three-dimensional coordinate in the projection space into the three-dimensional coordinate in the virtual world based on the projection matrix.

2. The interactive control method according to claim 1, wherein said obtaining the two-dimensional screen space coordinate of the key point of the predetermined part by the monocular camera comprises:

    (S210) obtaining a first image containing the predetermined part collected by the monocular camera; and
    (S220) performing a key point detection on the first image to obtain the two-dimensional screen space coordinate of the key point of the predetermined part.

3. The interactive control method according to claim 2, wherein said performing the key point detection on the first image to obtain the two-dimensional screen space coordinate of the key point of the predetermined part comprises:

(S230) processing the first image through a trained convolutional neural network model to obtain the key point of the predetermined part; and

(S240) performing a regression processing on the key point of the predetermined part to obtain position information of the key point of the predetermined part, and determining the position information as the two-dimensional screen space coordinate.

4. The interactive control method according to claim 2, wherein the photographic device comprises a depth camera, and said obtaining the real distance between the key point of the predetermined part and the photographic device comprises:

(S410) obtaining a second image containing the predetermined part collected by the depth camera;

(S420) aligning the first image and the second image; and

(S430) valuing the two-dimensional screen space coordinate on the aligned second image to obtain the real distance between the key point of the predetermined part and the depth camera.

5. The interactive control method according to claim 1, wherein said determining the spatial relationship between the key point of the predetermined part and the virtual object in the virtual world based on the three-dimensional coordinate, and controlling, based on the spatial relationship, the key point of the predetermined part to interact with the virtual object comprise:

(S610) obtaining the three-dimensional coordinate of the key point of the predetermined part in the virtual world, the predetermined part interacting with the virtual object;

(S620) calculating a distance between the three-dimensional coordinate and a coordinate of the virtual object; and

(S630) triggering an interaction between the key point of the predetermined part and the virtual object, when the distance satisfies a predetermined distance.

6. The interactive control method according to claim 5, wherein said triggering the interaction between the key point of the predetermined part and the virtual object comprises:

(S710) identifying a current action of the key point of the predetermined part; and

(S720) matching the current action with a plurality of predetermined actions, and interacting with the virtual object in response to the current action based on a result of the matching,

wherein the plurality of predetermined actions and interactive operations are in one-to-one correspondence.

7. An interactive control apparatus (900), comprising:

a parameter obtaining module (901) configured to obtain a two-dimensional screen space coordinate of a key point of a predetermined part by a monocular camera, and obtain a real distance between the key point of the predetermined part and a photographic device;

a three-dimensional coordinate calculation module (902) configured to determine a three-dimensional coordinate of the key point of the predetermined part in a virtual world according to the real distance and the two-dimensional screen space coordinate; and

an interaction execution module (903) configured to determine a spatial relationship between the key point of the predetermined part and a virtual object in the virtual world based on the three-dimensional coordinate, and control, based on the spatial relationship, the key point of the predetermined part to interact with the virtual object, **characterized in that**,

the three-dimensional coordinate calculation module (902) comprises:

a reference coordinate obtaining module configured to obtain a three-dimensional coordinate of the key point of the predetermined part in a projection space according to the real distance and the two-dimensional screen space coordinate;

a matrix calculation module configured to determine a projection matrix based on a FOV of the photographic device; and

a coordinate conversion module configured to convert the three-dimensional coordinate in the projection space into the three-dimensional coordinate in the virtual world based on the projection matrix.

8. The interactive control apparatus (900) according to claim 7, wherein the parameter obtaining module (901) comprises:

a first image obtaining module configured to obtain a first image containing the predetermined part collected by the monocular camera; and
a screen space coordinate determining module configured to perform a key point detection on the first image to obtain the two-dimensional screen space coordinate of the key point of the predetermined part.

9. The interactive control apparatus (900) according to claim 8, wherein the screen space coordinate determining module comprises:

a key point detection module configured to process the first image through a trained convolutional neural network model to obtain the key point of the predetermined part; and
a coordinate determining module configured to perform a regression processing on the key point of the predetermined part to obtain position information of the key point of the predetermined part and determine the position information as the two-dimensional screen space coordinate.

10. The interactive control apparatus (900) according to claim 8, wherein the photographic device comprises a depth camera; and the obtaining module comprises:

a second image obtaining module configured to obtain a second image containing the predetermined part collected by the depth camera;
an image alignment module configured to align the first image and the second image; and
a real distance obtaining module configured to value the two-dimensional screen space coordinate on the aligned second image to obtain the real distance between the key point of the predetermined part and the depth camera.

11. The interactive control apparatus (900) according to claim 7, wherein the interaction execution module (903) comprises:

a three-dimensional coordinate obtaining module configured to obtain the three-dimensional coordinate of the key point of the predetermined part in the virtual world, the predetermined part interacting with the virtual object;
a distance calculation module configured to calculate a distance between the three-dimensional coordinate and a coordinate of the virtual object; and
an interaction determining module configured to trigger an interaction between the key point of the predetermined part and the virtual object, when the distance satisfies a predetermined distance, and
wherein the interaction determining module comprises:

an action identification module configured to identify a current action of the key point of the predetermined part; and
an interaction triggering module configured to match the current action with a plurality of predetermined actions, and interact with the virtual object in response to the current action based on a result of the matching, wherein the plurality of predetermined actions and interactive operations are in one-to-one correspondence.

12. A computer-readable storage medium, having a computer program stored thereon, wherein the computer program, when executed by a processor, performs the interactive control method according to any one of claims 1 to 6.

**Patentansprüche**

1. Interaktives Steuerungsverfahren, umfassend:

(S110) Erhalten einer zweidimensionalen Bildschirmkoordinate eines Schlüsselpunkts eines vorbestimmten Teils mittels einer monokularen Kamera und Erhalten einer realen Entfernung zwischen dem Schlüsselpunkt des vorbestimmten Teils und einer fotografischen Vorrichtung;
(S120) Bestimmen einer dreidimensionalen Koordinate des Schlüsselpunkts des vorbestimmten Teils in einer virtuellen Welt entsprechend der realen Entfernung und der zweidimensionalen Bildschirmkoordinate; und
(S130) Bestimmen einer räumlichen Beziehung zwischen dem Schlüsselpunkt des vorbestimmten Teils und einem virtuellen Objekt in der virtuellen Welt auf Grundlage der dreidimensionalen Koordinaten und Steuern des Schlüsselpunkts des vorbestimmten Teils, damit er mit dem virtuellen Objekt interagiert, auf Grundlage der räumlichen Beziehung, **dadurch gekennzeichnet, dass**

das Bestimmen der dreidimensionalen Koordinate des Schlüsselpunkts des vorbestimmten Teils in der virtuellen Welt entsprechend der realen Entfernung und der zweidimensionalen Bildschirmkoordinate Folgendes umfasst:

(S510) Erhalten eines dreidimensionalen Koordinatensystems des Schlüsselpunkts des vorbestimmten Teils in einem Projektionsraum auf Grundlage der realen Entfernung und des zweidimensionalen Bildschirmraumkoordinatensystems;

(S520) Bestimmen einer Projektionsmatrix auf Grundlage des Sichtfelds (FOV) der fotografischen Vorrichtung; und

(S530) Umwandeln der dreidimensionalen Koordinate im Projektionsraum in die dreidimensionale Koordinate in der virtuellen Welt auf Grundlage der Projektionsmatrix.

2. Interaktives Steuerungsverfahren nach Anspruch 1, wobei das Erhalten der zweidimensionalen Bildschirmkoordinate des Schlüsselpunkts des vorbestimmten Teils mittels der monokularen Kamera Folgendes umfasst:

(S210) Erhalten eines ersten Bildes, das den vorbestimmten, von der monokularen Kamera erfassten Teil enthält; und

(S220) Durchführen einer Schlüsselpunkterkennung auf dem ersten Bild, um die zweidimensionale Bildschirmkoordinate des Schlüsselpunkts des vorbestimmten Teils zu erhalten.

3. Interaktives Steuerungsverfahren nach Anspruch 2, wobei das Durchführen der Schlüsselpunkterkennung auf dem ersten Bild zum Erhalten der zweidimensionalen Bildschirmkoordinate des Schlüsselpunkts des vorbestimmten Teils Folgendes umfasst:

(S230) Verarbeiten des ersten Bildes durch ein trainiertes Faltungsnetzwerkmodell, um den Schlüsselpunkt des vorbestimmten Teils zu erhalten; und

(S240) Durchführen einer Regressionsverarbeitung am Schlüsselpunkt des vorbestimmten Teils, um Positionsinformationen des Schlüsselpunkts des vorbestimmten Teils zu erhalten, und Bestimmen der Positionsinformationen als zweidimensionale Bildschirmkoordinate.

4. Interaktives Steuerungsverfahren nach Anspruch 2, wobei die Fotovorrichtung eine Tiefenkamera umfasst und das Erhalten der realen Entfernung zwischen dem Schlüsselpunkt des vorbestimmten Teils und der fotografischen Vorrichtung Folgendes umfasst:

(S410) Erhalten eines zweiten Bildes, das den von der Tiefenkamera erfassten vorbestimmten Teil enthält;

(S420) Ausrichten des ersten Bildes und des zweiten Bildes; und

(S430) Auswerten der zweidimensionalen Bildschirmkoordinate auf dem ausgerichteten zweiten Bild, um die reale Entfernung zwischen dem Schlüsselpunkt des vorbestimmten Teils und der Tiefenkamera zu erhalten.

5. Interaktives Steuerungsverfahren nach Anspruch 1, wobei das Bestimmen der räumlichen Beziehung zwischen dem Schlüsselpunkt des vorbestimmten Teils und dem virtuellen Objekt in der virtuellen Welt auf Grundlage der dreidimensionalen Koordinate und das Steuern des Schlüsselpunkts des vorbestimmten Teils, damit er mit dem virtuellen Objekt interagiert, auf der Grundlage der räumlichen Beziehung, Folgendes umfasst:

(S610) Erhalten der dreidimensionalen Koordinate des Schlüsselpunkts des vorbestimmten Teils in der virtuellen Welt, wobei der vorbestimmte Teil mit dem virtuellen Objekt interagiert;

(S620) Berechnen einer Entfernung zwischen der dreidimensionalen Koordinate und einer Koordinate des virtuellen Objekts; und

(S630) Auslösen einer Interaktion zwischen dem Schlüsselpunkt des vorbestimmten Teils und dem virtuellen Objekt, wenn die Entfernung eine vorbestimmte Entfernung erfüllt.

6. Interaktives Steuerungsverfahren nach Anspruch 5, wobei das Auslösen der Interaktion zwischen dem Schlüsselpunkt des vorbestimmten Teils und dem virtuellen Objekt Folgendes umfasst:

(S710) Identifizieren einer aktuellen Aktion des Schlüsselpunkts des vorbestimmten Teils; und

(S720) Abgleichen der aktuellen Aktion mit einer Vielzahl vorbestimmter Aktionen und Interagieren mit dem virtuellen Objekt als Reaktion auf die aktuelle Aktion auf Grundlage des Ergebnisses des Abgleichs,

wobei die Vielzahl vorbestimmter Aktionen und interaktive Operationen in einer Eins-zu-Eins-Beziehung stehen.

7. Interaktive Steuereinrichtung (900), umfassend:

ein Parametererhaltungsmodul (901), das so konfiguriert ist, dass es mit einer monokularen Kamera eine zweidimensionale Bildschirmkoordinate eines Schlüsselpunkts eines vorbestimmten Teils erhält und eine reale Entfernung zwischen dem Schlüsselpunkt des vorbestimmten Teils und einer fotografischen Vorrichtung erhält; ein Modul (902) zur Berechnung dreidimensionaler Koordinaten, das so konfiguriert ist, dass es die dreidimensionalen Koordinaten des Schlüsselpunkts des vorbestimmten Teils in einer virtuellen Welt entsprechend der realen Entfernung und der zweidimensionalen Bildschirmkoordinate bestimmt; und ein Interaktionsausführungsmodul (903), das so konfiguriert ist, dass es eine räumliche Beziehung zwischen dem Schlüsselpunkt des vorbestimmten Teils und einem virtuellen Objekt in der virtuellen Welt auf Grundlage der dreidimensionalen Koordinate ermittelt und, auf Grundlage der räumlichen Beziehung, den Schlüsselpunkt des vorbestimmten Teils steuert, damit er mit dem virtuellen Objekt interagiert, **dadurch gekennzeichnet, dass** das Modul zur Berechnung dreidimensionaler Koordinaten (902) Folgendes umfasst:

ein Modul zur Erhaltung von Referenzkoordinaten, das so konfiguriert ist, dass es eine dreidimensionale Koordinate des Schlüsselpunkts des vorbestimmten Teils in einem Projektionsraum entsprechend der realen Entfernung und der zweidimensionalen Bildschirmkoordinate erhält; ein Matrixberechnungsmodul, das so konfiguriert ist, dass es eine Projektionsmatrix auf Grundlage des Sichtfeldes der fotografischen Vorrichtung bestimmt; und ein Koordinatenumwandlungsmodul, das so konfiguriert ist, dass es die dreidimensionale Koordinate im Projektionsraum auf Grundlage der Projektionsmatrix in die dreidimensionale Koordinate in der virtuellen Welt umwandelt.

8. Interaktive Steuereinrichtung (900) nach Anspruch 7, wobei das Parametererhaltungsmodul (901) Folgendes umfasst:

ein erstes Bilderhaltungsmodul, das so konfiguriert ist, dass es ein erstes Bild erhält, das den vorbestimmten, von der monokularen Kamera erfassten Teil enthält; und ein Modul zur Bestimmung der Bildschirmkoordinaten, das so konfiguriert ist, dass es eine Schlüsselpunkterkennung auf dem ersten Bild durchführt, um die zweidimensionale Bildschirmkoordinate des Schlüsselpunkts des vorbestimmten Teils zu erhalten.

9. Interaktive Steuereinrichtung (900) nach Anspruch 8, wobei das Modul zur Bestimmung der Bildschirmraumkoordinate Folgendes umfasst:

ein Schlüsselpunkterkennungsmodul, das so konfiguriert ist, dass es das erste Bild durch ein trainiertes Faltungsnetzwerkmodell verarbeitet, um den Schlüsselpunkt des vorbestimmten Teils zu erhalten; und ein Koordinatenbestimmungsmodul, das so konfiguriert ist, dass es eine Regressionsverarbeitung am Schlüsselpunkt des vorbestimmten Teils durchführt, um Positionsinformationen des Schlüsselpunkts des vorbestimmten Teils zu erhalten und die Positionsinformationen als die zweidimensionale Bildschirmkoordinate zu bestimmen.

10. Interaktive Steuereinrichtung (900) nach Anspruch 8, wobei die fotografische Vorrichtung eine Tiefenkamera umfasst; und das erhaltungsmodul Folgendes umfasst:

ein zweites Bilderhaltungsmodul, das so konfiguriert ist, dass es ein zweites Bild erhält, das den von der Tiefenkamera erfassten vorbestimmten Teil enthält; ein Bildausrichtungsmodul, das so konfiguriert ist, dass es das erste Bild und das zweite Bild ausrichtet; und ein Modul zur Erhaltung der realen Entfernung, das so konfiguriert ist, dass es die zweidimensionale Bildschirmkoordinate auf dem ausgerichteten zweiten Bild auswertet, um die reale Entfernung zwischen dem Schlüsselpunkt des vorbestimmten Teils und der Tiefenkamera zu erhalten.

11. Interaktive Steuereinrichtung (900) nach Anspruch 7, wobei das Interaktionsausführungsmodul (903) Folgendes umfasst:

ein Modul zur Erhaltung dreidimensionaler Koordinaten, das so konfiguriert ist, dass es die dreidimensionale Koordinate des Schlüsselpunkts des vorbestimmten Teils in der virtuellen Welt erhält, wobei der vorbestimmte Teil mit dem virtuellen Objekt interagiert;

ein Enternungsberechnungsmodul, das so konfiguriert ist, dass es eine Entfernung zwischen der dreidimensionalen Koordinate und einer Koordinate des virtuellen Objekts berechnet; und

ein Interaktionsbestimmungsmodul, das so konfiguriert ist, dass es eine Interaktion zwischen dem Schlüsselpunkt des vorbestimmten Teils und dem virtuellen Objekt auslöst, wenn die Entfernung eine vorbestimmte Entfernung erfüllt, und

wobei das Interaktionsbestimmungsmodul Folgendes umfasst:

ein Aktionsidentifizierungsmodul, das so konfiguriert ist, dass es eine aktuelle Aktion des Schlüsselpunkts des vorbestimmten Teils identifiziert; und

ein Interaktionsauslösemodul, das so konfiguriert ist, dass es die aktuelle Aktion mit einer Vielzahl vordefinierter Aktionen abgleicht und auf Grundlage eines Ergebnisses des Abgleichs als Reaktion auf die aktuelle Aktion mit dem virtuellen Objekt interagiert,

wobei die Vielzahl vorbestimmter Aktionen und interaktive Operationen in einer Eins-zu-Eins-Beziehung stehen.

12. Computerlesbares Speichermedium, das ein auf demselben gespeichertes Computerprogramm aufweist, wobei das Computerprogramm, wenn es durch einen Prozessor ausgeführt wird, das interaktive Steuerungsverfahren nach einem der Ansprüche 1 bis 6 durchführt.

**Revendications**

1. Procédé de commande interactive, comprenant :

(S110) l'obtention d'une coordonnée d'espace d'écran bidimensionnelle d'un point clé d'une partie prédéterminée au moyen d'une caméra monoculaire, et l'obtention d'une distance réelle entre le point clé de la partie prédéterminée et un dispositif photographique ;

(S120) la détermination d'une coordonnée tridimensionnelle du point clé de la partie prédéterminée dans un monde virtuel en fonction de la distance réelle et de la coordonnée d'espace d'écran bidimensionnelle ; et

(S130) la détermination d'une relation spatiale entre le point clé de la partie prédéterminée et un objet virtuel dans le monde virtuel sur la base de la coordonnée tridimensionnelle, et la commande, sur la base de la relation spatiale, du point clé de la partie prédéterminée de façon à interagir avec l'objet virtuel, **caractérisé en ce que**, ladite détermination de la coordonnée tridimensionnelle du point clé de la partie prédéterminée dans le monde virtuel en fonction de la distance réelle et de la coordonnée d'espace d'écran bidimensionnelle comprend :

(S510) l'obtention d'une coordonnée tridimensionnelle du point clé de la partie prédéterminée dans un espace de projection sur la base de la distance réelle et de la coordonnée d'espace d'écran bidimensionnelle ;

(S520) la détermination d'une matrice de projection sur la base d'un champ de vision, FOV, du dispositif photographique ; et

(S530) la conversion de la coordonnée tridimensionnelle dans l'espace de projection en coordonnée tridimensionnelle dans le monde virtuel sur la base de la matrice de projection.

2. Procédé de commande interactive selon la revendication 1, dans lequel ladite obtention de la coordonnée d'espace d'écran bidimensionnelle du point clé de la partie prédéterminée au moyen de la caméra monoculaire comprend :

(S210) l'obtention d'une première image contenant la partie prédéterminée collectée par la caméra monoculaire ; et

(S220) l'exécution d'une détection du point clé sur la première image de façon à obtenir la coordonnée d'espace d'écran bidimensionnelle du point clé de la partie prédéterminée.

3. Procédé de commande interactive selon la revendication 2, dans lequel ladite exécution de la détection du point clé sur la première image de façon à obtenir la coordonnée d'espace d'écran bidimensionnelle du point clé de la partie prédéterminée comprend :

(S230) le traitement de la première image au moyen d'un modèle de réseau neuronal convolutif entraîné de façon à obtenir le point clé de la partie prédéterminée ; et

(S240) l'exécution d'un traitement de régression sur le point clé de la partie prédéterminée de façon à obtenir des informations de position du point clé de la partie prédéterminée, et la détermination des informations de position au titre de la coordonnée d'espace d'écran bidimensionnelle.

4. Procédé de commande interactive selon la revendication 2, dans lequel le dispositif photographique comprend une caméra de profondeur, et ladite obtention de la distance réelle entre le point clé de la partie prédéterminée et le dispositif photographique comprend :

(S410) l'obtention d'une seconde image contenant la partie prédéterminée collectée par la caméra de profondeur ;

(S420) l'alignement de la première image et de la seconde image ; et

(S430) l'évaluation de la coordonnée d'espace d'écran bidimensionnelle sur la seconde image alignée de façon à obtenir la distance réelle entre le point clé de la partie prédéterminée et la caméra de profondeur.

5. Procédé de commande interactive selon la revendication 1, dans lequel ladite détermination de la relation spatiale entre le point clé de la partie prédéterminée et l'objet virtuel dans le monde virtuel, sur la base de la coordonnée tridimensionnelle, et la commande, sur la base de la relation spatiale, du point clé de la partie prédéterminée de façon à interagir avec l'objet virtuel, comprennent :

(S610) l'obtention de la coordonnée tridimensionnelle du point clé de la partie prédéterminée dans le monde virtuel, la partie prédéterminée interagissant avec l'objet virtuel ;

(S620) le calcul d'une distance entre la coordonnée tridimensionnelle et une coordonnée de l'objet virtuel ; et

(S630) lorsque la distance satisfait une distance prédéterminée, le déclenchement d'une interaction entre le point clé de la partie prédéterminée et l'objet virtuel.

6. Procédé de commande interactive selon la revendication 5, dans lequel ledit déclenchement de l'interaction entre le point clé de la partie prédéterminée et l'objet virtuel comprend :

(S710) l'identification d'une action en cours du point clé de la partie prédéterminée ; et

(S720) la mise en correspondance de l'action en cours et d'une pluralité d'actions prédéterminées, et, en réponse à l'action en cours, l'interaction avec l'objet virtuel sur la base d'un résultat de la mise en correspondance, dans lequel la pluralité d'actions prédéterminées et d'opérations interactives sont en correspondance biunivoque.

7. Appareil de commande interactive (900), comprenant :

un module d'obtention de paramètre (901) configuré pour obtenir une coordonnée d'espace écran bidimensionnelle d'un point clé d'une partie prédéterminée au moyen d'une caméra monoculaire, et pour obtenir une distance réelle entre le point clé de la partie prédéterminée et un dispositif photographique ;

un module de calcul de coordonnée tridimensionnelle (902) configuré pour déterminer une coordonnée tridimensionnelle du point clé de la partie prédéterminée dans un monde virtuel en fonction de la distance réelle et de la coordonnée d'espace d'écran bidimensionnelle ; et

un module d'exécution d'interaction (903) configuré pour déterminer une relation spatiale entre le point clé de la partie prédéterminée et un objet virtuel dans le monde virtuel sur la base de la coordonnée tridimensionnelle, et pour commander, sur la base de la relation spatiale, le point clé de la partie prédéterminée de façon à interagir avec l'objet virtuel, **caractérisé en ce que**,

le module de calcul de coordonnée tridimensionnelle (902) comprend :

un module d'obtention de coordonnée de référence configuré pour obtenir une coordonnée tridimensionnelle du point clé de la partie prédéterminée dans un espace de projection en fonction de la distance réelle et de la coordonnée d'espace d'écran bidimensionnelle ;

un module de calcul de matrice configuré pour déterminer une matrice de projection sur la base d'un champ de vision du dispositif photographique ; et

un module de conversion de coordonnée configuré pour convertir la coordonnée tridimensionnelle dans l'espace de projection en coordonnée tridimensionnelle dans le monde virtuel sur la base de la matrice de projection.

8. Appareil de commande interactive (900) selon la revendication 7, dans lequel le module d'acquisition de paramètre (901) comprend :

un module d'obtention d'une première image configuré pour obtenir une première image contenant la partie prédéterminée collectée par la caméra monoculaire ; et
un module de détermination de la coordonnée d'espace écran configuré pour exécuter une détection du point clé sur la première image de façon à obtenir la coordonnée d'espace écran bidimensionnelle du point clé de la partie prédéterminée.

9. Appareil de commande interactive (900) selon la revendication 8, dans lequel le module de détermination de la coordonnée d'espace écran comprend :

un module de détection du point clé configuré pour traiter la première image au moyen d'un modèle de réseau neuronal convolutif entraîné de façon à obtenir le point clé de la partie prédéterminée ; et
un module de détermination de coordonnée configuré pour exécuter un traitement de régression sur le point clé de la partie prédéterminée de façon à obtenir des informations de position du point clé de la partie prédéterminée et pour déterminer les informations de position au titre de la coordonnée d'espace d'écran bidimensionnelle.

10. Appareil de commande interactive (900) selon la revendication 8, dans lequel le dispositif photographique comprend une caméra de profondeur ; et le module d'obtention comprend :

un module d'obtention d'une seconde image configuré pour obtenir une seconde image contenant la partie prédéterminée collectée par la caméra de profondeur ;
un module d'alignement d'images configuré pour aligner la première image et la seconde image ; et
un module d'obtention de distance réelle configuré pour évaluer la coordonnée d'espace d'écran bidimensionnelle sur la seconde image alignée de façon à obtenir la distance réelle entre le point clé de la partie prédéterminée et la caméra de profondeur.

11. Appareil de commande interactive (900) selon la revendication 7, dans lequel le module d'exécution d'interaction (903) comprend :

un module d'obtention de la coordonnée tridimensionnelle configuré pour obtenir la coordonnée tridimensionnelle du point clé de la partie prédéterminée dans le monde virtuel, la partie prédéterminée interagissant avec l'objet virtuel ;
un module de calcul de distance configuré pour calculer une distance entre la coordonnée tridimensionnelle et une coordonnée de l'objet virtuel ; et
un module de détermination d'interaction configuré pour déclencher une interaction entre le point clé de la partie prédéterminée et l'objet virtuel, lorsque la distance satisfait une distance prédéterminée, et
dans lequel le module de détermination d'interaction comprend :

un module d'identification d'action configuré pour identifier une action en cours du point clé de la partie prédéterminée ; et
un module de déclenchement d'interaction configuré pour mettre en correspondance l'action en cours et une pluralité d'actions prédéterminées, et pour, en réponse à l'action en cours, interagir avec l'objet virtuel sur la base d'un résultat de la mise en correspondance,
dans lequel la pluralité d'actions prédéterminées et d'opérations interactives sont en correspondance biunivoque.

12. Support de stockage lisible par ordinateur, sur lequel est stocké un programme informatique, dans lequel le programme informatique, lorsqu'il est exécuté par un processeur, exécute le procédé de commande interactive selon l'une quelconque des revendications 1 à 6.

Obtaining a screen space coordinate of a key point of a predetermined part, and obtaining a real distance between the key point of the predetermined part and a photographic device ⌐∽/ S110

Determining a three-dimensional coordinate of the key point of the predetermined part in a virtual world by combining the real distance with the screen space coordinate ⌐∽/ S120

Determining a spatial relationship between the key point of the predetermined part and a virtual object in the virtual world based on the three-dimensional coordinate, and controlling, based on the spatial relationship, the key point of the predetermined part to interact with the virtual object ⌐∽/ S130

**FIG. 1**

Obtaining a first image containing the predetermined part and captured by a monocular camera ∽/ S210

Performing a key point detection on the first image to obtain the screen space coordinate of the key point of the predetermined part ∽/ S220

Processing the first image through a trained convolutional neural network model to obtain the key point of the predetermined part ∽/ S230

Performing a regression processing on the key point of the predetermined part to obtain position information of the key point of the predetermined part, and determining the position information as the screen space coordinate ∽/ S240

**FIG. 2**

FIG. 3

Obtaining a second image containing the predetermined part and captured by the depth camera

S410

Aligning the first image and the second image

S420

Valuing the screen space coordinate on the aligned second image to obtain the real distance between the key point of the predetermined part and the depth camera

S430

FIG. 4

Obtaining a three-dimensional coordinate of the key point of the predetermined part in a projection space based on the real distance and the screen space coordinate — S510

Determining a projection matrix based on a Field Of View (FOV) of the photographic device — S520

Converting the three-dimensional coordinate in the projection space into the three-dimensional coordinate in the virtual world based on the projection matrix — S530

**FIG. 5**

Obtaining the three-dimensional coordinate of the key point of the predetermined part in the virtual world, the predetermined part interacting with the virtual object — S610

Calculating a distance between the three-dimensional coordinate and a coordinate of the virtual object — S620

Triggering an interaction between the key point of the predetermined part and the virtual object, when the distance satisfies a predetermined distance — S630

**FIG. 6**

Identifying a current action of the key point of the predetermined part ~/ S710

Matching the current action with a plurality of predetermined actions, and interacting with the virtual object in response to the current action based on a matching result, wherein the plurality of predetermined actions and interactive operations are in one-to-one correspondence ~/ S720

**FIG. 7**

S801

Collecting a
color image by a
monocular
camera

S802

Performing a key point
detection on the hand
to obtain a screen space
coordinate

S804

Combining the screen
space coordinate of the
key point with depth
information

S805

Three-
dimensional
coordinate of the
key point of the
hand in the virtual
world

S806

Spatial relationship
between  hand and
virtual object is
calculated to
perform an
interaction based on
the spatial
relationship

S803

Collecting a
depth image by
a depth camera

**FIG. 8**

900

## Interactive control apparatus

Parameter obtaining module — 901

Three-dimensional coordinate calculation module — 902

Interaction execution module — 903

**FIG. 9**

1000

1020

Storage unit

10201 — RAM

10203 — ROM

10202 — High-speed cache

10204

10205

1010 — Processing unit

1030 — I/O interface

1040 — Display unit

1050 — I/O interface

1060 — Network adapter

1200 — External device

**FIG. 10**

1100    Program

**FIG. 11**

**EP 3 971 685 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017140552 A1
- US 2017154471 A1

- WO 2008132724 A1